# EUROPEAN PATENT APPLICATION

(11) **EP 1 818 695 A1**
(43) Date of publication of application: **15.08.2007**
(21) Application number: 06252592.8
(22) Date of filing: 18.05.2006
(51) Int. Cl.: G02B 5/20, G02F 1/1335

(54) **Apparatus for fabricating color filter**

(30) Priority: 09.02.2006 KR 20060012604
(71) Applicant: Samsung Electronics Co., Ltd., Suwon-si, Gyeonggi-Do (KR)
(72) Inventor: Baek, Seong-soon, Suwon-si Gyeonggi-do (KR); Kim, Seong-jin, Seongnam-di Gyeonggi-do (KR); Shin, Seung-joo, Nowon-gu Seoul (KR)
(74) Representative: Greene, Simon Kenneth

(57) **Abstract**

An apparatus for fabricating a color filter. This apparatus includes an inkjet head movably installed over a substrate on which a plurality of pixels are formed, discharging ink of predetermined colors into the pixels, and a porous member movably installed over the pixels filled with the ink discharged from the inkjet head, forming a solvent ambient around the ink filled within the pixels due to evaporation of a solvent filled in the porous member, whereby the drying speed of the ink is reduced.

## Description

The present invention relates to an apparatus for fabricating a color filter, and more particularly, an apparatus for fabricating a color filter, by which ink layers having uniform thicknesses are formed within pixels of the color filter.

Up to now, cathode ray tube (CRT) monitors have been usually used to display information from TVs and computers. However, recently, flat panel displays, such as, liquid crystal displays (LCDs), plasma display panels (PDPs), electro-luminescence (EL) displays, light emitting diodes (LEDs), or field emission displays (FEDs), are being used with an increase in the sizes of screens. LCDs among these flat panel displays are widely used as desk-top computer monitors, lap-top computer monitors, etc. because of low power consumption.

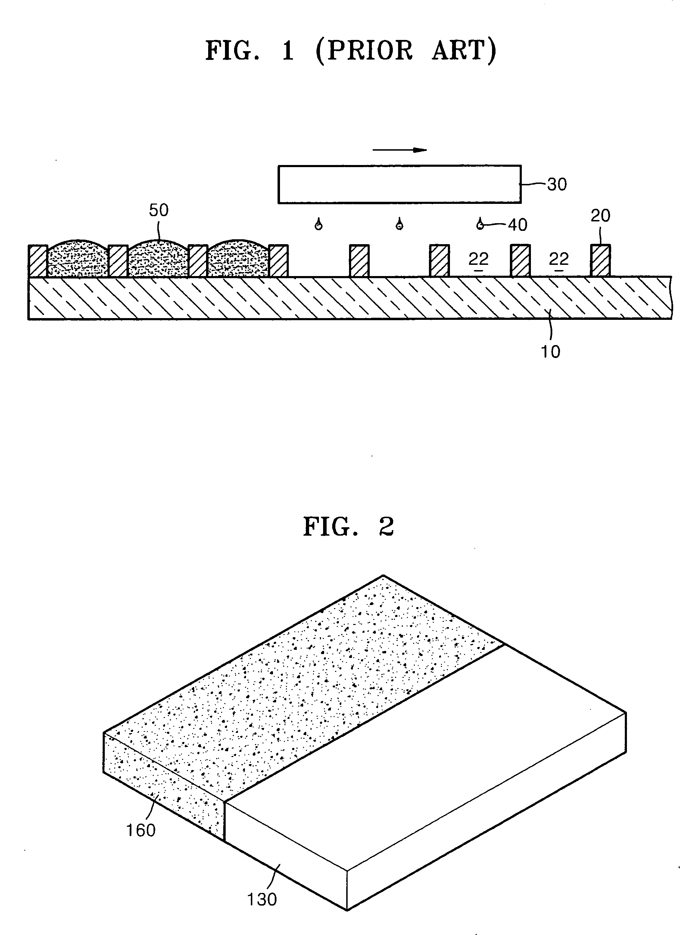

General LCDs include a color filter that forms images of desired colors by transmitting white light modulated by a liquid crystal layer. A color filter includes an arrangement of a plurality of red (R), green (G), and blue (B) pixels formed on a transparent substrate. A color filter has been fabricated using a dyeing method, a pigment dispersion method, a printing method, an electrodeposition method, etc. However, these methods include a repetition of predetermined processes for pixels of each color, thus degrading the process efficiency and increasing the fabrication costs.
Accordingly, a method of fabricating a color filter using an inkjet printing technique is recently proposed, which is performed more simply and cost-effectively. This method is illustrated in FIG. 1, in which a color filter is fabricated using an inkjet head 30 as an apparatus for manufacturing a color filter using an inkjet printing technique. Referring to FIG. 1, ink drops 40 of predetermined colors, such as, red (R), green (G), and blue (B), are discharged into pixels 22 on a substrate 10 through the nozzles of the inkjet head 30, whereby the pixels 22 are filled with liquid ink 50. Then, the liquid ink 50 is dried to thereby fabricate the color filter. However, while the liquid ink 50 is being dried, a variety of mass flows occur within the pixels 22 according to the drying speed of the ink 50. Accordingly, the thickness of each of ink layers formed within the pixels 22 after the drying process may be non-uniform. Additionally, the partial pressures of solvent vapor evaporated from the ink 50 during the drying of the ink 50 are smaller at pixels 22 located at the edges of the color filter than at pixels 22 located on the inner side of the color filter. Hence, the ink 50 within the pixels 22 located at the edges of the color filter is dried faster than that within the pixels 22 located on the inner side of the color filter. Thus, ink layers having more non-uniform thicknesses may be formed within the pixels 22 located at the edges of the color filter than the pixels 22 located on the inner side of the color filter. The formation of the ink layers having non-uniform thicknesses within the pixels 22 may cause light to leak from the pixels 22. Furthermore, since the pixels 22 having ink layers with a large thickness variation are concentrated on a specific location, that is, on the edges of the color filter, a problem which badly affects the quality of a panel is generated, such as, generation of a blurry image.

According to an aspect of the present invention, there is provided an apparatus for fabricating a color filter, the apparatus including an inkjet head movably installed over a substrate on which a plurality of pixels are formed, discharging ink of predetermined colors into the pixels, and a porous member movably installed over the pixels filled with the ink discharged from the inkjet head, forming a solvent ambient around the ink filled within the pixels due to evaporation of a solvent filled in the porous member, whereby the drying speed of the ink is reduced.

The porous member may be attached to the inkjet head. The porous member may be attached to at least one lateral side of the inkjet head.

The porous member may be spaced apart from the inkjet head. The porous member and the inkjet head may move at different speeds.

An interval between the porous member and the substrate may be equal to an interval between the inkjet head and the substrate.

The porous member may be formed of one material of ceramic and high polymer. Pores formed in the porous member may be connected to one another. The pores may be no more than 1 µm in size. The pores may be smaller than the thickness of the porous member.

A solvent supply pipe for supplying as much solvent as the amount of solvent consumed due to evaporation to the porous member may be connected to the porous member.

The present invention thus provides an apparatus for fabricating a color filter, by which ink layers having uniform thicknesses are formed within pixels of the color filter.

The above and other features and advantages of the present invention will become more apparent by describing in detail exemplary embodiments thereof with reference to the attached drawings in which:
FIG. 1 illustrates a conventional method of fabricating a color filter using a conventional apparatus for fabricating a color filter;
FIG. 2 is a perspective view of an apparatus for fabricating a color filter, according to an embodiment of the present invention;
FIG. 3 illustrates a method of fabricating a color filter using the apparatus of FIG. 2; and
FIG. 4 illustrates a color filter fabricating apparatus according to another embodiment of the present invention and a method of fabricating a color filter using this apparatus.

The present invention will now be described more fully with reference to the accompanying drawings, in which exemplary embodiments of the invention are shown. In the drawings, the thicknesses of elements are exaggerated for clarity. Like reference numerals in the drawings denote like elements, and thus their description will be omitted.

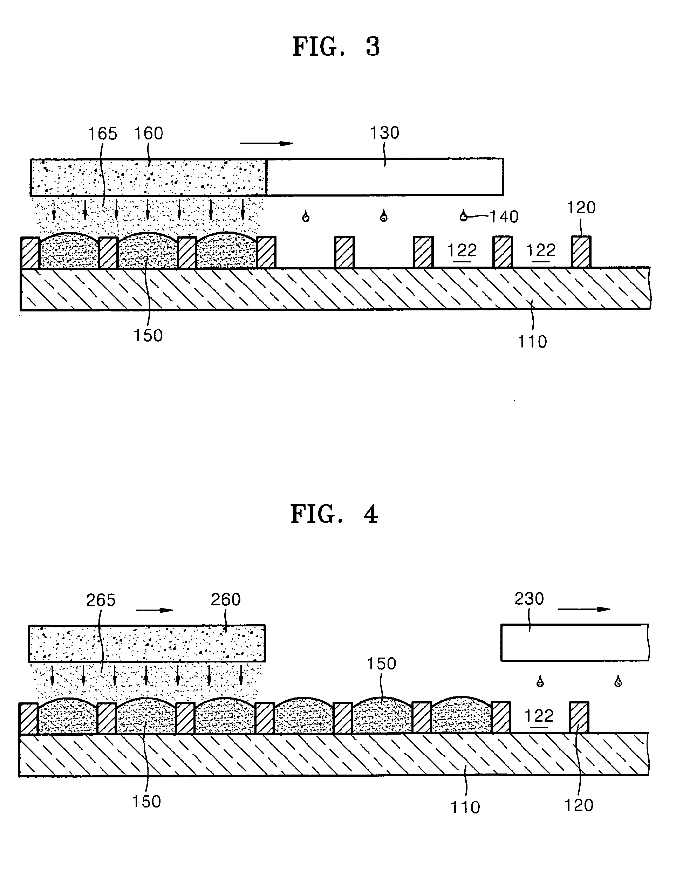

FIG. 2 is a perspective view of an apparatus for fabricating a color filter, according to an embodiment of the present invention. FIG. 3 illustrates a method of fabricating a color filter using the apparatus of FIG. 2. Referring to FIGS. 2 and 3, the apparatus for fabricating a color filter includes an inkjet head 130 and a porous member 160 attached to the inkjet head 130. The inkjet head 130 is movably placed over a substrate 110 a predetermined distance away therefrom. The inkjet head 130 includes a plurality of nozzles (not shown) through which ink drops 140 are discharged. The substrate 110 is transparent and may be a glass substrate or a plastic substrate. A black matrix 120 defining a plurality of pixels 122 is formed on the substrate 110. The inkjet head 130 discharges ink drops 140 of predetermined colors, such as, red (R), green (G), and blue (B), into the pixels 122, so that the pixels 122 are filled with ink 150 of the predetermined colors.

The porous member 160 is located over the pixels 122 filled with the ink 150 of the predetermined colors by the inkjet head 130. The porous member 160 has a plurality of pores (not shown) which are filled with a solvent. The solvent filled in the porous member 160 evaporates to form a solvent ambient 165 around the ink 150 filled within the pixels 122. The solvent ambient 165 reduces the speed at which the ink 150 is dried.

The interval between the porous member 160 and the substrate 110 may be set to be equal to that between the inkjet head 130 and the substrate 110. Alternatively, the interval between the porous member 160 and the substrate 110 may be set to be different from that between the inkjet head 130 and the substrate 110. For example, the porous member 160 may be formed of ceramic or high polymer. The pores of the porous member 160 may be about 1µm or less in size. The pores may be smaller than the thickness of the porous member. The pores may be connected to one another so as to effectively keep the amount of solvent filled within the porous member 160. The solvent filled within the porous member 160 may be composed of a material identical with the material of the solvent included in the ink 150. Alternatively, the solvent of the porous member 160 may be composed of a material different from the solvent included in the ink 150. For example, the solvent of the porous member 160 may be composed of at least one of di(propylene glycol) methyl ether acetate (DPMA), propylene glycol monomethyl ether acetate (PGMEA), ethyle acetate, and acetone.

The porous member 160 is attached to one lateral side of the inkjet head 130. Alternatively, the porous member 160 may be attached to at least two lateral sides of the inkjet head 130. Since the porous member 160 is attached to at least one lateral side of the inkjet head 130 as described above, the porous member 160 moves at the same speed as the inkjet head 130. A solvent supply pipe (not shown) to supply as much solvent as the amount of solvent consumed due to evaporation to the porous member 160 may be connected to the porous member 160. The solvent supply pipe is connected to a solvent reservoir (not shown).

In the color filter fabricating apparatus having such a structure, first, the ink drops 140 are discharged from the inkjet head 130 into the pixels 122 formed on the substrate 110 so that the pixels 122 are filled with the ink 150 of the predetermined colors. Then, the inkjet head 130 and the porous member 160 are moved so that the porous member160 are placed over the pixels 122 filled with the ink 150. In this state, the solvent in the porous member 60 evaporates, so that the solvent ambient 165 is formed around the ink 150, that is, in the space between the porous member 160 and the pixels 22 filled with the ink 150. When the solvent ambient 165 is kept, the drying speed of the ink 150 filled in the pixels 122 is uniformly decreased, and ink layers having uniform thicknesses are formed within the pixels 122 after the drying of the ink 150.

In the present embodiment, the porous member 160 is attached to the inkjet head 130 and thus moves at the same speed as the inkjet head 130. However, in this case, when the inkjet head 130 and the porous member 160 move fast, the solvent ambient 165 around the ink 150 filled in the pixels 122 may not be kept effectively. To address this problem, there is provided a color filter fabricating apparatus according to another embodiment of the present invention, which is illustrated in FIG. 4. Only the differences between the two embodiments will now be described.

Referring to FIG. 4, the color filter fabricating apparatus according to another embodiment of the present invention includes an inkjet head 230 and a porous member 260. The inkjet head 230 and the porous member 260 are movably installed over the substrate 110. In contrast with the previous embodiment, the porous member 260 is spaced apart from one lateral side of the inkjet head 230. The porous member 260 may move at a different speed from the inkjet head 230, for example, as a lower speed than the inkjet head 130. The moving speed of the porous member 260 may be optimized so as to form an effective solvent ambient 265 around the ink 150 filled within the pixels 122. Alternatively, the porous member 260 may move at the same speed as the inkjet head 230. The porous member 160 is filled with a solvent. A solvent supply pipe (not shown) to supply as much solvent as the amount of solvent consumed due to evaporation to the porous member 260 may be connected to the porous member 260.

In the color filter fabricating apparatus having such a structure, first, ink drops are discharged from the inkjet head 230 into the pixels 122 formed on the substrate 110 so that the pixels 122 are filled with the ink 150 of the predetermined colors. Then, the porous member 260 are moved and located over the pixels 122 filled with the ink 150. In this state, the solvent in the porous member 260 evaporates, so that the solvent ambient 265 is formed around the ink 150 filled within the pixels 122. When the solvent ambient 265 is kept, the drying speed of the ink 150 filled in the pixels 122 is uniformly decreased, and ink layers having uniform thicknesses are formed within the pixels 122 after the drying of the ink 150.

As described above, a color filter fabricating apparatus according to the present invention can uniformly reduce the drying speed of ink filled within pixels on a substrate, by using a solvent ambient formed around the ink. Thus, ink layers having uniform thicknesses are formed within the pixels after the drying of the ink.

Although a color filter fabricating apparatus which is usually used in LCDs has been illustrated, this apparatus may be equally applied to the formation of an organic light emitting layer using an inkjet printing technique in the manufacture of an organic light emitting diode (OLED) or the formation of an organic semiconductor using an inkjet printing technique in the manufacture of an organic thin film transistor (OTFT).

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An apparatus for fabricating a color filter, the apparatus comprising:
an inkjet head movably installed over a substrate on which a plurality of pixels are formed, arranged to discharge ink of predetermined colors into the pixels; and
a porous member movably installed over the pixels arranged to form a solvent vapor around the ink filled within the pixels due to evaporation of a solvent filled in the porous member, whereby the drying speed of the ink is reduced.

2. The apparatus of claim 1, wherein the porous member is attached to the inkjet head.

3. The apparatus of claim 1 or 2, wherein the porous member is attached to at least one lateral side of the inkjet head.

4. The apparatus of claim 1, wherein the porous member is spaced apart from the inkjet head.

5. The apparatus of claim 1 or 4, wherein the porous member and the inkjet head move at different speeds.

6. The apparatus of any preceding claim, wherein an interval between the porous member and the substrate is equal to an interval between the inkjet head and the substrate.

7. The apparatus of any preceding claim, wherein the porous member is formed of one material of ceramic and high polymer.

8. The apparatus of any preceding claim, wherein pores formed in the porous member are connected to one another.

9. The apparatus of claim 8, wherein the pores are no more than 1 µm in size.

10. The apparatus of claim 8 or 9, wherein the pores are smaller than the thickness of the porous member.

11. The apparatus of any preceding claim, wherein a solvent supply pipe for supplying as much solvent as the amount of solvent consumed due to evaporation from the porous member is connected to the porous member.
